# EUROPEAN PATENT SPECIFICATION

(11) **EP 3 011 211 B1**
(45) Date of publication and mention of the grant of the patent: **23.05.2018**
(21) Application number: 14736215.6
(22) Date of filing: 12.06.2014
(51) Int. Cl.: F16L 13/14, F16L 19/02

(54) **VISUAL INDICATOR FOR SWAGE FLUID COUPLING**
VISUELLER ANZEIGER FÜR KALTVERFÖRMTE FLÜSSIGKEITSKUPPLUNG
INDICATEUR VISUEL POUR UN ACCOUPLEMENT HYDRAULIQUE DE SERTISSAGE

(30) Priority: 20.06.2013 US 201313922872
(43) Date of publication of application: 27.04.2016
(73) Proprietor: Eaton Corporation, Cleveland, OH 44122 (US)
(72) Inventor: NEAL, Jon, Wallace, Denver, CO 80202 (US); SHOWN, Robert, Charles, Hayden, AL 35079 (US); BREAY, Clifton, P., Littleton, CO 80217 (US)
(74) Representative: Schwan Schorer & Partner mbB
(86) International application number: PCT/US2014/042031
(87) International publication number: WO 2014/204764

(56) References cited:
- AT-A4- 507 566
- DE-C1- 19 856 769
- US-A- 5 010 952
- US-A- 6 050 609

## Description

### FIELD OF THE INVENTION

The invention relates to fluid conveying members connected to one another such as by a coupling device, and more particularly, to fluid conveying members having ends that incorporate corresponding flanges secured to coupling devices in which the fluid conveying members and flanges are joined by a swaging process.

### BACKGROUND OF THE INVENTION

There are numerous inventions relating to fluid conveying members or conduits, and various coupling devices that can be used to interconnect fluid conveying members. The particular design of the coupling device, as well as the design of the fluid conveying members is typically determined by the special requirements associated with the type of fluid being conveyed. For conveying non-volatile fluids such as water, a coupling device may be afforded a more simple construction, since potential leakage in many applications may not introduce a significant health or safety concern. On the contrary, for fluid conveying members that convey fuel or other volatile or hazardous liquids, the construction of the coupling device and fluid conveying members typically requires redundant sealing features, as well as redundant locking or tamper proofing features.

For fluid conveying members that convey fuel that are used within particularly hazardous applications such as within an aircraft, stringent industry standards have been developed to ensure safety in the handling of fuel. Any leakage of fuel within such an environment could result in a catastrophic fire or explosion.

Fluid conveying members in aircraft are typically connected to one another with robust and reliable couplers that ensure a leak proof seal is achieved between the connected fluid conveying members. The abutting ends of the fluid conveying members include a metallic flange that is received within and held by the coupler. The metallic flange is often attached to the end of the fluid conveying tube by a swaging process in which the flange or tube is swaged, and therefore a fluid tight seal is achieved between the flange and tube end.

One example of a reference that discloses a swaged fitting includes the US Patent No. 5,452,921. The fitting is used in an attachment to a tube comprising a cylindrical sleeve having a tapered outer surface and an inner surface for receiving the tube. A cylindrical swaging ring having a tapered inner surface engages the tapered outer surface of the sleeve such that axial movement of the ring in a forward direction with respect to the sleeve causes the ring to apply a radial force to the sleeve to swage it to the tube. The swaging ring is locked onto the sleeve both before and after swaging by one or more protrusions on the outer surface of the sleeve which cooperatively engage an annular groove in the swaging ring.

Another example of a reference that discloses a swaged configuration for tubing and an associated sleeve or flange includes the US Patent No. 3,730,567. Specifically, a coupling sleeve for a swaged attachment to tubing is disclosed. The sleeve has a pair of annular grooves of a predetermined depth provided in the inner peripheral wall with the grooves being separated by an annular ring raised from the floor of the grooves. The width of the annular ring in the axial direction is such that tubing swaged into the grooves tends to assume a separate bend adjacent each land edge and to remain essentially flat in the area intermediate the two edges. The inner diameter of the cylindrical body in the area of the annular ring is arranged such that it is less than the inner diameter of the body in the area of the annular grooves and greater than the inner diameter of the cylindrical body in the area remote from the grooves thereby resulting in a two stage application of force to the tube walls during the swaged attachment operation.

Another example of a reference that discloses a swaged connection for tubing and an associated coupling device includes the US Patent No. 7,900,976. The device includes a coupling body and a collar adapted to engage a tubular member in a permanent swaged connection. The coupling device includes axially spaced front and back ferrules that engage during swaging to provide a plurality of seals intermediate the ferrules and the tubular member as well as the coupling body. The back ferrule includes a central region having a generally cylindrical wall that is elastically deformed to a corrugated tube-like shape during swaging to enhance the maintenance of the seals. A portable installation tool for swaging the coupling body and collar to the tubular member is hydraulically actuated. A fluid coupling is disclosed in US 5,010,952 A. The coupling is performed by cold forming. A test port extends through the body of the coupling housing. With respect to a swaged connection between a fluid conveying member such as a tube/pipe and a corresponding flange/ferrule, there are generally two types of swaging processes. Internal swaging is a process by which the internal member (the tube/pipe) is internally expanded to compress the tube/pipe material against the interior surface of the corresponding flange/ferrule. Such internal swaging can be achieved by pulling a hardened tool of a larger diameter through the interior of the tube/pipe in order to expand it against the interior surface of the flange/ferrule. External swaging is a swaging process in which the outer flange/ferrule is compressed onto the interior tube/pipe. External swaging can be achieved by pushing the components to be joined through a hardened die having an interior diameter smaller than the external diameter of the flange/ferrule. In both cases, the compressive force applied to the components causes material to flow into the serrated cavities, thus providing a secure mechanical bond that is leak proof.

Although swaging is known to be a reliable method of joining a flange and tube for purposes of conveying hazardous fluids, quality control checks must still be made in order to confirm that a swaging process has been successful in creating a leak proof connection. The current practice used for quality control involves destructive testing of a statistical sampling of swaged connections. Specifically, swaged samples or "coupons" are cross-sectioned to analyze the joint or connection to determine the quality of the swaged connection. Since this destructive sampling is only done on a statistical basis, there is still the potential for fluid conveying members to be used in which a swaged connection may not be entirely adequate for the intended use.

Because of the inherent disadvantages of statistical sampling and destructive testing, there is a need to provide the capability to confirm the adequacy of a swaged connection, especially for those environments in which volatile fluids are conveyed. There is also a need to provide such capability without significantly altering the construction of the fluid conveying line, flange, or coupling device. There is yet further a need to provide such capability that is easily confirmed by a user or inspector, without the need for special inspecting equipment.

### SUMMARY OF THE INVENTION

In accordance with the present invention, a swage visual indicator for a fluid coupling and a method of performing a quality test for a swaged connection are disclosed. The swage visual indicator is achieved by a non-destructive visual indication of a swaging process by one or more swage apertures formed through a flange filled with an indicator material. The aperture(s) is located in alignment with a swaging groove of the flange. As the swaging process is conducted, tubing material is forced into swaging grooves of the flange. The indicator material has a portion thereof that extends into the corresponding groove prior to swaging. As tube material enters the groove, the indicator material is displaced in a direction toward the exposed exterior surface of the flange. More specifically, as the swaging takes place, the tube material compressed into the groove forces the indicator material out of the groove and toward the exterior surface through the aperture. In a successful swaging process, the indicator material is displaced to a degree such that the indicator material is visible by an unaided visual inspection.

In one aspect of the visual indicator, it incorporates use of indicator material that is visually distinct from the surrounding materials, and is capable of being displaced such that the indicator material provides a consistent and reliable indication of whether the swaging process was successful.

In another aspect of the visual indicator, it incorporates use of the indicator material in a desired volume retained within one or more apertures formed in the flange, such that when the swaging process is conducted, an adequate amount of the indicator material is displaced so the indicator material can be seen easily by the naked eye to confirm whether the swaging process was successful. Accordingly, a visual inspection can be made to avoid a destructive testing method.

In yet another aspect of the visual indicator, it includes use a softer material as compared to the flange, such that the indicator material is capable of deformation and displacement under a cold formed swaging process. Many swaging processes are cold forming processes in which the swaged connection does not require heating. Accordingly, the indicator material in one preferred embodiment includes a material that is capable of easily being displaced in temperatures a cold forming process takes place.

In another aspect of the visual indicator, is preferable that the indicator material be resistant to galvanic corrosion, thereby not compromising the connection between the fluid conveying member, and flange.

In yet another aspect of the visual indicator, it is preferable that the indicator material be electrically conductive to the same order of magnitude as the adjacent components being swaged, therefore the indicator material will not interfere with the desired conductivity of the connection.

In yet another aspect of the invention, if the particular material chosen for the indicator material is not electrically conductive to the desired degree, then the location of the indicator material is placed so that it does not interfere with the conductivity of bonding wires or bonding clips that may be used for achieving electrical bonding of the associated coupling device.

In yet another aspect of the invention, a plurality of visual indicators are provided on the joint between a flange and fluid conveying member in which the visual indicators are spaced from one another radially around the circumference of the flange in a spiral arrangement. The spiral arrangement allows visual confirmation that the swaging operation was successful, both radially and axially throughout the joint. This spiral arrangement also reduces the potential that a linear set of apertures would introduce an unacceptably weakened area along the flange.

In yet another aspect of the invention, it can be considered a combination including a pair of abutting flanges with corresponding conveying tubes joined by a coupling device. This combination provides a leak proof connection for axially aligned fluid conveying members in which both flanges can be inspected for adequate swaging between the flanges and their corresponding fluid conveying members.

According to the method of the invention, one or more apertures formed in the flange are filled with indicator material. Each aperture has a measured volume of indicator material such that when a swaging process is conducted, the indicator material is displaced within the apertures a distance within the apertures to allow visual inspection. In one aspect of the method, displacement of the indicator material is achieved within the apertures such that the indicator material is flush or nearly flush with the exposed exterior surface of the flange, therefore indicating that a proper swaging process has been conducted. Conversely, if the indicator material still remains recessed within the aperture and is not readily visible, then a conclusion can be drawn that the swaging process was not successful because the swaging did not result in adequate expansion or deformation of the tube or flange materials.

Considering the above features and aspects of the invention, in accordance with one preferred embodiment, the invention can be considered a visual indicator for a fluid coupling comprising (i) a fluid coupling component having a sidewall defining a hollow interior, and a plurality of grooves formed on an interior surface of said sidewall; (ii) an aperture formed through said sidewall and intersecting one of said grooves; (iii) indicator material placed in said aperture; and (iv) a fluid conveying member connected to said fluid coupling component by a swaging process in which material from said fluid conveying member is compressed into said grooves, thereby displacing said indicator material within said aperture.

In accordance with another embodiment, the invention can be considered a method of providing a visual indicator for a fluid conveying member, comprising (i) providing a fluid coupling component having a sidewall defining a hollow interior, and a plurality of grooves formed on an interior surface of said sidewall; (ii) forming an aperture through said sidewall and intersecting one of said grooves; (iii) placing indicator material in said aperture such that said indicator material has a first end extending beyond said aperture into said groove, and a second end of said indicator material is retained within said aperture; (iv) providing a fluid conveying member and inserting one end of said fluid conveying member within said fluid coupling component; and (v) conducting a swaging process in which material from said fluid conveying member is compressed into said grooves, thereby displacing said indicator material within said aperture.

In accordance with yet another embodiment, the invention can be considered a method of performing a visual inspection of a swaged connection, comprising (i) providing a swaged joint between a fluid coupling component and a fluid conveying member, wherein an aperture is formed through a sidewall of said fluid coupling component, and said aperture is filled with indicator material; (ii) viewing said aperture to determine whether said indicator material is visible; wherein if said indicator material is visible, then it is concluded that proper swaging was conducted in which an adequate amount material from said fluid conveying member entered and filled swaging grooves of said fluid coupling component during swaging; and further wherein if said indicator material is not visible, then it is concluded that improper swaging was conducted in which an inadequate amount of material from said fluid conveying member entered said swaging grooves during swaging.

In yet another embodiment, the invention can be considered a combination including a fluid coupling and a visual indicator for a fluid coupling to determine adequacy of swaged joints in said fluid coupling, comprising (i) a first fluid coupling component connected to a corresponding first fluid conveying member by a swaged connection, said first fluid coupling component having a sidewall defining a hollow interior, and a plurality of grooves formed on an interior surface of said sidewall filled with material from said first fluid conveying member during swaging; (ii) a second fluid coupling component connected to a corresponding second fluid conveying member by a swaged connection, said second fluid coupling component having a sidewall defining a hollow interior, and a plurality of grooves formed on an interior surface of said sidewall filled with material from said second fluid conveying member during swaging;
(iii) a first aperture formed through said sidewall of said first fluid coupling component and intersecting one of said grooves of said first fluid coupling component; (iv) a first indicator material placed in said first aperture, wherein said first indicator material is visible by viewing said first fluid coupling component after swaging if proper swaging was conducted; (v) a second aperture formed through said sidewall of said second fluid coupling component and intersecting one of said grooves of said second fluid coupling component; (vi) a second indicator material placed in said second aperture, wherein said second indicator material is visible by viewing said second fluid coupling component after swaging if proper swaging was conducted; and (vii) a fluid coupler interconnecting facing ends of said first and second fluid coupling components.

### BRIEF DESCRIPTION OF THE DRAWINGS

Fig. 1 is an exploded fragmentary perspective view of a fluid conveying member in the form of a tube, and a flange to be joined to one another in a swaging process;
Fig. 2 is a fragmentary perspective view of Fig. 1 showing the tube and flange connected prior to swaging;
Fig. 3 is an enlarged fragmentary cross-sectional view illustrating the tube and flange connected prior to swaging, and indicator material filling an aperture formed in the flange according to a preferred embodiment of the invention;
Fig. 4 is an enlarged fragmentary cross-sectional view of Fig. 3, illustrating the tube and flange connected after swaging, in which indicator material is displaced through the aperture;
Fig. 5 is a fragmentary perspective view of a plurality of indicator apertures formed in a flange according to another preferred embodiment of the invention; and
Fig. 6 is a cross sectional view of another embodiment of the invention defined as a combination including visual indicators for a pair of abutting flanges with corresponding conveying tubes joined by a coupling device.

### DETAILED DESCRIPTION OF THE INVENTION

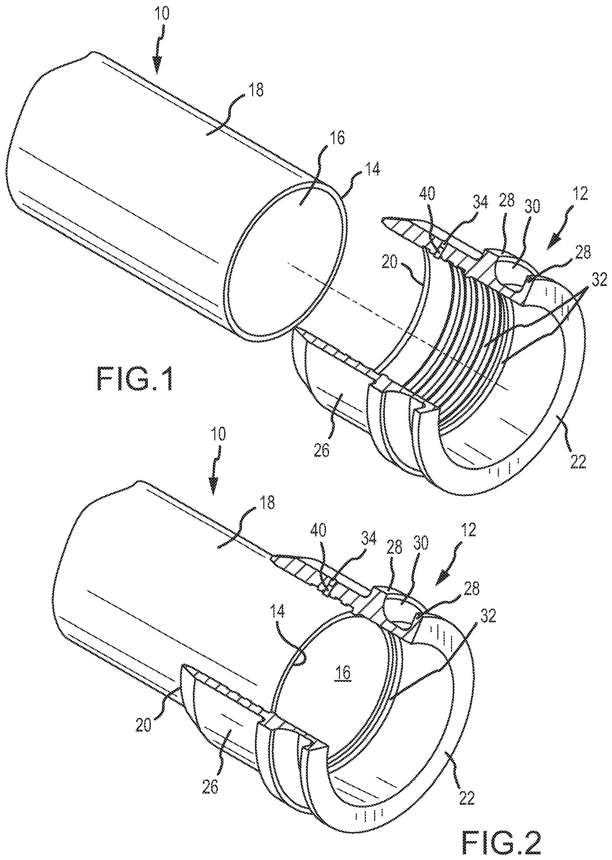

Fig. 1 illustrates an example fluid conveying member in the form of a tube 10 and an example flange 12 that is used to interconnect the tube 10 to a coupler (not shown). The flange 12 illustrated in Fig. 1 is representative of flanges commonly used for coupling devices used to interconnect fluid conveying members that convey volatile fluids. Examples of US patent references that disclose coupling devices that incorporate similar tube and flange combinations include US Patent Nos. 6,050,609 and 6,880,859. These two references disclose example coupling devices used to interconnect facing ends of fluid conveying members that are specially designed for carrying volatile fluids such as fuel.

Fig. 1 further shows basic features of the tube 10 and flange 12. The tube has a distal end 14 that is inserted into the flange 12. The interior surface 16 of the tube 10 comes into contact with the fluid conveyed. The exterior surface 18 of the tube is typically smooth. The flange has a proximal end 20 that receives the distal end 14 of the tube 10. The distal end 22 of the flange 12 has a rib or rim 28 formed thereon. The rim 28 has a channel 30 that is adapted to receive a resilient and flexible sealing element, such as an O-ring (not shown). The interior surface of the flange 12 has a plurality of swaging grooves 32 spaced from one another longitudinally along a portion of the flange. An indicator aperture 34 is formed through the flange.

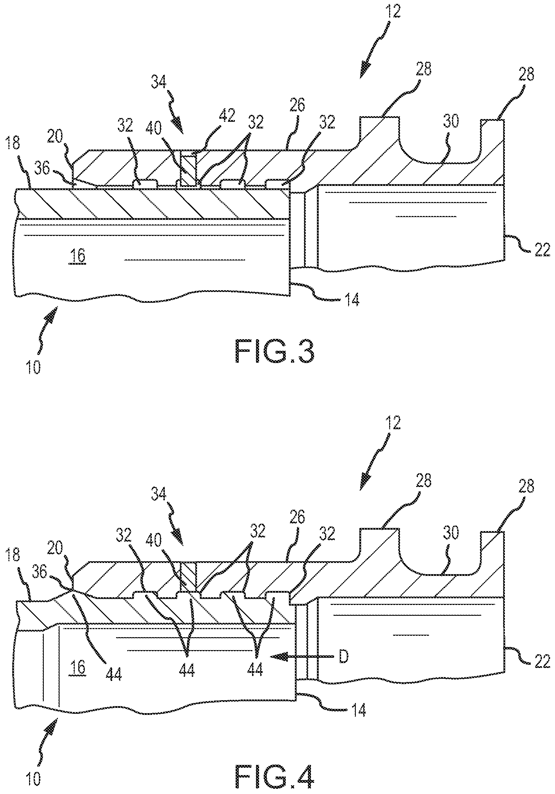

Referring to Figs. 2 and 3, the tube is inserted within the flange 12, and is located in the proper position for the ensuing swaging operation. Accordingly, the distal end 14 of the tube 10 is located at or near the most interior groove 32. The indicator aperture 34 extends through the sidewall of the flange 12 and is aligned with one of the swaging grooves 32. Fig. 3 also shows indicator material 40 placed within the aperture 34. The indicator material 40 may be in the form of a cylindrical shaped "slug" with an end thereof that protrudes into the corresponding groove 32 prior to swaging. Fig. 3 also illustrates an expanded interior edge 36 of the flange 12 at the proximal end 20 forming a gap between the exterior surface 18 of the tube.

Referring to Fig. 4, a swaging operation is conducted in which a swage tool or ram (not shown) is inserted through the flange 12 in the direction of the arrow D, thereby expanding the interior diameter of the tube 10 and displacing tube material 44 into the grooves 32. Tube material 44 also fills the gap adjacent the expanded interior edge 36.

As the tube material 44 enters the groove 32 containing the end of the slug of indicator material 40, the slug is displaced and pushed through the aperture 34 such that the recessed area 42 becomes filled with the indicator material 40. In a preferred embodiment, a proper swaging operation is signified by the indicator material 40 residing flush or nearly flush with the exterior surface 26 of the flange 12. As can be appreciated, if the indicator material has been only partially displaced so that it is not flush or nearly flush with the exterior surface 26, this indicates that the tube material 44 did not properly fill the groove 32 at that location, and therefore an incomplete connection may exist between the tube and the flange. During visual inspection, it would be apparent to the user/inspector that the swaging operation was not successful, since the indicator material would be difficult to view, or perhaps not visible at all if the indicator material remained deep enough within the aperture 34.

Preferably, the indicator material 40 is capable of being displaced within a cold forming swaging operation, and therefore does not require heating. The fill material is preferably electrically conductive and corrosion resistant. Further, the fill material is preferably substantially incompressible so that the protruding end of the slug within the groove does not inadvertently mushroom and spread out against the interior surface of the groove 32 as the tube material 44 enters the groove and makes contact with the end of the slug. Accordingly, substantially linear movement of the indicator material through the aperture 34 is desirable.

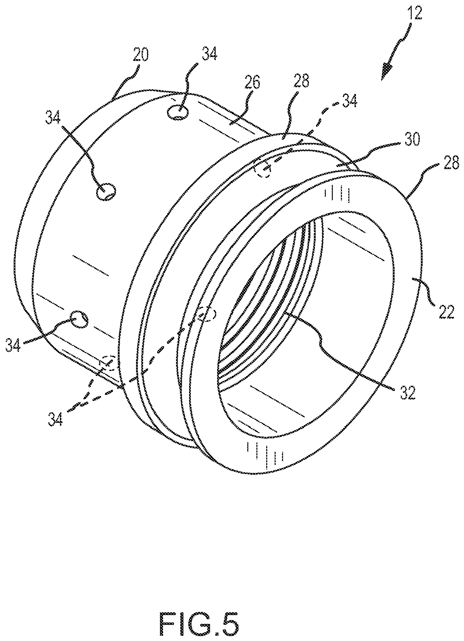

Referring to Fig. 5, another embodiment of the visual indicator is shown in which a plurality of apertures 34 is formed on a flange 12. More specifically, the apertures 34 are preferably located in a spiral pattern. According to this spiral arrangement of apertures 34, a visual inspection can be conducted for not only radially dispersed locations, but also longitudinally or axially dispersed locations. By providing a group of apertures in this pattern, a user/inspector can confirm proper connection between the tube and flange which otherwise may not be detectable with a single aperture. For example, slight misalignment of the swaging tool may cause incomplete compression of the tube material into certain portions of the grooves 32; however, there will be other locations in which the tube material is not displaced fully into the grooves. A single aperture located over the area of complete compression will not necessarily provide an indication of the success of the swaging operation, since area(s) of incomplete compression cannot be seen. With the spiral pattern of apertures, any appreciable misalignment or other defects in the swaging process that may not result in adequate compression of the tube material into the grooves has a much higher likelihood of being detected since viewing areas are provided longitudinally along the joints and radially around the joint. This spiral pattern of apertures is preferable over a linear arrangement of apertures, since such a linear arrangement may result in a weakened area being formed on the flange, depending upon the size of the apertures.

According to a method of the invention, a tube is placed within a flange having interior swaging grooves. The flange has at least one inspection point in the form of an aperture formed through the flange and aligned with one of the swaging grooves. The aperture includes a slug of indicator material that is initially recessed below an exterior surface of the flange. A swaging operation is conducted to expand the interior diameter of the tube such that the tube material is compressed or forced into the interior grooves of the flange. As the tube material enters the groove aligned with the aperture, the slug is pushed through the aperture towards the exterior surface of the flange. In this displaced location, the indicator material is made visible to a user/inspector. A plurality of inspection points may be provided in which a plurality of apertures are formed through the flange, each containing a slug of indicator material. A radial and axial/ longitudinal arrangement of the apertures provides a more complete inspection capability in which the connection between the tube and flange is inspected for both radial and axial connection.

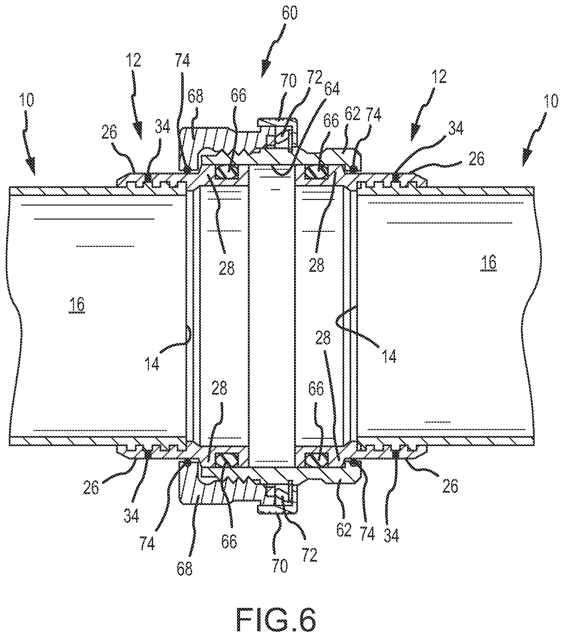

Referring again to Fig 6 in yet another aspect of the invention, a combination is illustrated including a pair of abutting flanges with corresponding conveying tubes joined by a coupling device. This combination provides a leak proof connection for axially aligned fluid conveying members in which both flanges can be inspected for adequate swaging between the flanges and their corresponding fluid conveying members. More specifically, Fig. 6 is a cross-sectional view of a coupler 60 with a design of that shown and described in the US Patent No. 6,050,609. A coupling device 60 interconnects facing flanges 12 each having corresponding tubes 10. The coupling device includes a coupler 62 that spans a gap between the facing surfaces of the flanges 12. The coupler 62 has a cylindrical body whose interior surface 64 is in contact with O-rings 66 to seal the connection between the flanges. A nut 68 is mounted on the coupler 62. Nut 68 has internal threads that engage external threads of the coupler, as shown. These pairs of threads enable the coupler 62 and nut 68 to be drawn together longitudinally to a locked position. A lock ring 70 is mounted over the coupler 62 and nut 68. The lock ring 70 includes an annular spring 72, mounted within a peripheral internal groove of the lock ring. The coupling device incorporates features to align the lock ring over the coupler 62 and nut 68 such that when aligned, the nut 68 can be rotated to a locked position, and the spring 72 enables the lock ring 70 to be maintained in a biased locking position. The nut 68 and coupler 62 include respective bonding wires 74 that maintain contact with the exterior surfaces of the flanges 12 to provide electrical continuity from the flanges across the coupling device. In the example of Fig. 6, the indicator apertures 34 are shown for illustration purposes as being located 180° apart from one another around the peripheries of the flanges; however, as noted with respect to Fig.5, a spiral arrangement of apertures 34 is contemplated and therefore, the apertures are not required to be spaced from one another in any particular geometric arrangement except to avoid a plurality of indicator apertures arranged linearly. From a review of Fig. 6, it is apparent that the indicator apertures do not require any structural modification of the coupling device 60, and the apertures 34 are located such that an operator who may manipulate the coupling device also has a convenient visual opportunity to confirm an adequate connection between the respective flanges and tubes.

While one preferred embodiment has been described with respect to an internal swaging operation, it should understood that the invention is not limited to internal swaging, and the visual indicator could also be used in conjunction with an external swaging operation. The amount of visual indicator material placed in the corresponding aperture(s) can be selected to accommodate either type of swaging process.

There are number of advantages to the visual indicator device and method of the invention. The device and method provide for nondestructive inspection without having to significantly modify the construction of either the tube or flange. Further, the device and method do not compromise the general integrity of the tube or flange; therefore, no additional material must be used to join the components. An inspection can be conducted without the need for special equipment.

The foregoing invention has been described with respect to one or more preferred embodiments. However, it shall be understood that various changes and modifications can be made to the invention commensurate with the scope of the claims appended hereto.

## Claims

1. A visual indicator for a fluid coupling comprising:
a fluid coupling component having a sidewall defining a hollow interior, and a plurality of grooves (32) formed on an interior surface of said sidewall;
an aperture (34) formed through said sidewall and intersecting one of said grooves; indicator material (40) placed in said aperture; and
a fluid conveying member connected to said fluid coupling component by a swaging process; wherein in the swaging process material (44) from said fluid conveying member is compressed into said grooves, thereby displacing said indicator material within said aperture.

2. A visual indicator, as claimed in claim 1, wherein:
said indicator material (40) includes a slug of substantially non-compressible material that travels through said aperture (34) by force from said material (44) of said fluid conveying member during swaging.

3. A visual indicator, as claimed in claim 1, wherein:
said indicator material (40) is electrically conductive and substantially matches conductivity of said fluid coupling component.

4. A visual indicator, as claimed in claim 1, wherein:
said fluid coupling component includes a flange (12) having a first end (20) connected to said fluid conveying member, and having a second end (22) including a rib (28) and a channel (30) formed on said rib.

5. A visual indicator, as claimed in claim 1, wherein:
said aperture (34) includes a plurality of apertures formed through said sidewall; and said indicator material (40) includes a plurality of indicator material slugs placed in corresponding apertures, each of said slugs having a first end extending beyond said aperture into a corresponding groove (32), and a second end retained within said aperture;
wherein said plurality of apertures preferably is formed in a spiral pattern around a circumference of said fluid coupling component.

6. A visual indicator, as claimed in claim 1, wherein:
said aperture (34) is a cylindrical shaped hole formed through said sidewall, and said indicator material (40) includes a cylindrical shaped slug sized to fit within said aperture.

7. A visual indicator, as claimed in claim 1, wherein:
said indicator material (40) has a first end extending beyond said aperture (34) into said groove (32) prior to swaging, and a second end of said indicator material is retained within said aperture;

8. A method of providing a visual indicator for a fluid conveying member, comprising:
providing a fluid coupling component having a sidewall defining a hollow interior, and a plurality of grooves (32) formed on an interior surface of said sidewall;
forming an aperture (34) through said sidewall and intersecting one of said grooves; placing indicator material (40) in said aperture such that said indicator material has a first end extending beyond said aperture into said groove, and a second end of said indicator material is retained within said aperture;
providing a fluid conveying member and inserting one end of said fluid conveying member within said fluid coupling component; and
conducting a swaging process in which material (44) from said fluid conveying member is compressed into said grooves, thereby displacing said indicator material within said aperture.

9. A method, as claimed in claim 8, wherein:
as material (44) from said fluid conveying member enters said groove (32) during the swaging process, said indicator material (40) is pushed through said aperture (34) towards an exterior surface of said fluid coupling component and is made visible to a user.

10. A method, as claimed in claim 8, wherein:
said fluid coupling component includes a flange (12) having a first end (20) connected to said fluid conveying member, and having a second end (22) including a rib (28) and a channel (30) formed on said rib.

11. A method, as claimed in claim 8, wherein:
said aperture (34) includes a plurality of apertures formed through said sidewall, and spaced from one another in a spiral pattern; and
said indicator material (40) includes a plurality of indicator material slugs placed in corresponding apertures, each of said slugs having a first end extending beyond said aperture into a corresponding groove (32) prior to swaging, and a second end retained within said aperture.

12. A method, as claimed in claim 8, wherein:
said aperture (34) is a cylindrical shaped hole formed through said sidewall, and said indicator material (40) includes a cylindrical shaped slug sized to fit within said aperture.

13. A method of performing a visual inspection of a swaged connection, comprising:
providing a swaged joint between a fluid coupling component and a fluid conveying member, wherein an aperture (34) is formed through a sidewall of said fluid coupling component, and said aperture filled with indicator material (40);
viewing said aperture to determine whether said indicator material is visible; wherein if said indicator material is visible, then it is concluded that proper swaging was conducted in which an adequate amount material (40) from said fluid conveying member entered and filled swaging grooves (32) of said fluid coupling component during swaging; and
further wherein if said indicator material is not visible, then it is concluded that improper swaging was conducted in which an inadequate amount of material from said fluid conveying member entered said swaging grooves during swaging.

14. In combination, a fluid coupling and a visual indicator according to claim 1 for a fluid coupling to determine adequacy of swaged joints in said fluid coupling comprising:
a first fluid coupling component connected to a corresponding first fluid conveying member by a swaged connection, said first fluid coupling component having a sidewall defining a hollow interior, and a plurality of grooves formed on an interior surface of said sidewall filled with material from said first fluid conveying member during swaging; a second fluid coupling component connected to a corresponding second fluid conveying member by a swaged connection, said second fluid coupling component having a sidewall defining a hollow interior, and a plurality of grooves formed on an interior surface of said sidewall filled with material from said second fluid conveying member during swaging;
a first aperture (34) formed through said sidewall of said first fluid coupling component and intersecting one of said grooves of said first fluid coupling component;
a first indicator material placed in said first aperture, wherein said first indicator material is visible by viewing said first fluid coupling component after swaging if proper swaging was conducted;
a second aperture (34) formed through said sidewall of said second fluid coupling component and intersecting one of said grooves of said second fluid coupling component;
a second indicator material placed in said second aperture, wherein said second indicator material is visible by viewing said second fluid coupling component after swaging if proper swaging was conducted; and
a fluid coupler (60) interconnecting facing ends of said first and second fluid coupling components.

15. The combination, as claimed in claim 14, wherein:
at least one of said first and second apertures (34) includes a plurality of apertures formed through said corresponding sidewall, and spaced from one another in a spiral pattern; and
at least one of said first and second indicator materials includes a plurality of indicator material slugs placed in corresponding apertures of said at least one of said first and second apertures, each of said slugs having a first end extending beyond a
corresponding aperture into a corresponding groove prior to swaging, and a second end retained within said corresponding aperture.

## Patentansprüche

1. Visueller Indikator für eine Fluidkupplung, versehen mit:
einer Fluidkupplungskomponente mit einer Seitenwand, die einen inneren Hohlraum ausbildet, und einer Mehrzahl von Rillen (32), die an einer Innenfläche der Seitenwand ausgeformt ist;
einer in der Seitenwand ausgebildeten Öffnung (34), die eine der Rillen durchschneidet, wobei Indikatormaterial (40) in der Öffnung angeordnet ist; und
einem Fluidübertragungsbauteil, das mit der Fluidkupplungskomponente durch ein Verpressverfahren in Verbindung steht; wobei in dem Verpressverfahren Material (44) von dem Fluidübertragungsbauteil in die Rillen gepresst wird, wodurch das Indikatormaterial innerhalb der Öffnung verlagert wird.

2. Visueller Indikator nach Anspruch 1, wobei das Indikatormaterial (40) einen Rohling aus im Wesentlichen nicht komprimierbarem Material umfasst, der sich durch die Kraft von dem Material (44) des Fluidübertragungsbauteils während des Verpressns durch die Öffnung (34) bewegt.

3. Visueller Indikator nach Anspruch 1, wobei das Indikatormaterial (40) elektrisch leitend ist und im Wesentlichen der Leitfähigkeit der Fluidkupplungskomponente entspricht.

4. Visueller Indikator nach Anspruch 1, wobei die Fluidkupplungskomponente einen Flansch (12) beinhaltet, der mit einem ersten Ende (20) mit dem Fluidübertragungsbauteil in Verbindung steht und der ein zweites Ende (22) einschließlich einer Rippe (28) und eines Kanals (30) aufweist, der an der Rippe ausgebildet ist.

5. Visueller Indikator nach Anspruch 1, wobei:
die Öffnung (34) eine Mehrzahl von in der Seitenwand ausgebildeten Öffnungen umfasst; und wobei das Indikatormaterial (40) eine in den entsprechenden Öffnungen angeordnete Mehrzahl von Indikatormaterialrohlingen aufweist, wobei sich jeder der Rohlinge mit einem ersten Ende über die Öffnung hinaus in eine entsprechende Rille (32) erstreckt, und wobei ein zweites Ende in der Öffnung zurückgehalten wird;
die Mehrzahl von Öffnungen vorzugsweise in einem spiralförmigen Muster um einen Umfang der Fluidkupplungskomponente herum ausgebildet ist.

6. Visueller Indikator nach Anspruch 1, wobei die Öffnung (34) ein durch die Seitenwand ausgebildetes, zylindrisch geformtes Loch ist, und wobei das Indikatormaterial (40) einen zylindrisch geformten Rohling umfasst, der für die Einpassung in die Öffnung dimensioniert ist.

7. Visueller Indikator nach Anspruch 1, wobei das Indikatormaterial (40) ein erstes Ende aufweist, das sich vor dem Verpressen über die Öffnung (34) hinaus in die Rille (32) erstreckt, wobei ein zweites Ende des Indikatormaterials innerhalb der Öffnung zurückgehalten wird;

8. Verfahren zur Bereitstellung eines visuellen Indikators für ein Fluidübertragungsbauteil, wobei im Zuge des Verfahrens:
eine Fluidkupplungskomponente mit einer Seitenwand bereitgestellt wird, die einen inneren Hohlraum ausbildet, wobei eine Mehrzahl von Rillen (32) an einer Innenfläche der Seitenwand ausgeformt ist;
eine Öffnung (34) durch die Seitenwand ausgebildet wird, die eine der Rillen durchschneidet; Indikatormaterial (40) derart in der Öffnung angeordnet wird, dass das Indikatormaterial ein erstes Ende aufweist, das sich über die Öffnung hinaus in die Rille erstreckt, wobei ein zweites Ende des Indikatormaterials in der Öffnung zurückgehalten wird;
ein Fluidübertragungsbauteil bereitgestellt wird und ein Ende des Fluidübertragungsbauteils in die Fluidkupplungskomponente eingefügt wird; und ein Verpressverfahren ausgeführt wird, wobei Material (44) von dem Fluidübertragungsbauteil in die Rillen gepresst wird, wodurch das Indikatormaterial innerhalb der Öffnung verlagert wird.

9. Verfahren nach Anspruch 8, wobei das Material (44) von dem Fluidübertragungsbauteil während des Verpressverfahrens in die Rille (32) eindringt, wobei das Indikatormaterial (40) durch die Öffnung (34) zu einer Außenfläche der Fluidkupplungskomponente hin geschoben und für den Benutzer sichtbar gemacht wird.

10. Verfahren nach Anspruch 8, wobei die Fluidkupplungskomponente einen Flansch (12) mit einem mit dem Fluidübertragungsbauteil in Verbindung stehenden ersten Ende (20) und mit einem zweiten Ende (22) einschließlich einer Rippe (28) und eines Kanals (30) umfasst, der an der Rippe ausgebildet ist.

11. Verfahren nach Anspruch 8, wobei:
die Öffnung (34) eine Mehrzahl von in der Seitenwand ausgebildeten Öffnungen umfasst, die in einem spiralförmigen Muster mit Abstand zueinander angeordnet sind; und
das Indikatormaterial (40) eine Mehrzahl von in den entsprechenden Öffnungen angeordneten Indikatormaterialrohlingen umfasst, wobei sich jeder der Rohlinge vor dem Verpressen mit einem ersten Ende über die Öffnung hinaus in eine entsprechende Rille (32) erstreckt, wobei ein zweites Ende in der Öffnung zurückgehalten ist.

12. Verfahren nach Anspruch 8, wobei die Öffnung (34) ein in der Seitenwand ausgebildetes, zylindrisch geformtes Loch ist, und wobei das Indikatormaterial (40) einen zylindrisch geformten Rohling umfasst, der für eine Einpassung in der Öffnung dimensioniert ist.

13. Verfahren zur Durchführung einer Sichtprüfung einer gesenkgeschmiedeten Verbindung, wobei im Zuge des Verfahrens:
eine verpresste Verbindung zwischen einer Fluidkupplungskomponente und einem Fluidübertragungsbauteil bereitgestellt ist, wobei eine Öffnung (34) in einer Seitenwand der Fluidkupplungskomponente ausgebildet ist, und wobei die Öffnung mit Indikatormaterial (40) befüllt ist;
die Öffnung angesehen wird, um zu bestimmen, ob das Indikatormaterial sichtbar ist; und falls das Indikatormaterial sichtbar ist, wird daraus geschlossen, dass ein geeignetes Verpressen durchgeführt wurde, bei dem eine angemessene Menge an Material (40) aus dem Fluidübertragungsbauteil eingetreten ist und die Verpressrillen (32) der Fluidkupplungskomponente während des Verpressens befüllt hat; und
falls das Indikatormaterial nicht sichtbar ist, daraus geschlossen wird, dass ein unzureichendes Verpressen durchgeführt wurde, bei dem während des Verpressens eine unangemessene Materialmenge aus dem Fluidübertragungsbauteil in die Verpressrillen eingedrungen ist.

14. Kombination aus Fluidkupplung und visuellem Indikator nach Anspruch 1 für eine Fluidkupplung zur Bestimmung der Eignung verpresster Verbindungen in der Fluidkupplung, wobei:
eine erste Fluidkupplungskomponente durch eine gesenkgeschmiedete Verbindung mit einem entsprechenden ersten Fluidübertragungsbauteil verbunden wird, wobei die erste Fluidkupplungskomponente eine Seitenwand aufweist, die einen inneren Hohlraum ausbildet, und wobei eine Mehrzahl von Rillen an einer Innenfläche der Seitenwand ausgebildet ist, die während des Verpressens mit Material aus dem ersten Fluidübertragungsbauteil befüllt werden; eine zweite Fluidkupplungskomponente durch eine gesenkgeschmiedete Verbindung mit einem entsprechenden zweiten Fluidübertragungsbauteil verbunden wird, wobei die zweite Fluidkupplungskomponente eine Seitenwand aufweist, die einen inneren Hohlraum ausbildet, und wobei eine Mehrzahl von Rillen an einer Innenfläche der Seitenwand ausgebildet ist, die während des Verpressens mit Material von dem zweiten Fluidübertragungsbauteil befüllt werden;
eine erste Öffnung (34) in der Seitenwand der ersten Fluidkupplungskomponente ausgebildet ist, die eine der Rillen der ersten Fluidkupplungskomponente durchschneidet;
ein erstes Indikatormaterial in der ersten Öffnung angeordnet wird, wobei das erste Indikatormaterial dadurch beobachtbar ist, dass die erste Fluidkupplungskomponente nach dem Verpressen sichtbar wird, wenn ein geeignetes Verpressen durchgeführt wurde;
eine zweite Öffnung (34) in der Seitenwand der zweiten Fluidkupplungskomponente ausgebildet ist, die eine der Rillen der zweiten Fluidkupplungskomponente durchschneidet;
ein zweites Indikatormaterial in der zweiten Öffnung angeordnet wird, wobei das zweite Indikatormaterial dadurch beobachtbar ist, dass die zweite Fluidkupplungskomponente nach dem Verpressen sichtbar wird, wenn ein geeignetes Verpressen durchgeführt wurde; und
ein Fluidkoppler (60) die gegenüberliegenden Enden der ersten und der zweiten Fluidkupplungskomponente miteinander verbindet.

15. Kombination nach Anspruch 14, wobei mindestens eine der ersten und zweiten Öffnungen (34) eine Mehrzahl von Öffnungen umfasst, die durch die entsprechende Seitenwand ausgebildet und in einem spiralförmigen Muster mit Abstand zueinander angeordnet sind; und wobei mindestens das erste und/oder das zweite Indikatormaterial eine Mehrzahl von Indikatormaterialrohlingen umfasst, die in entsprechenden Öffnungen der mindestens ersten und/oder zweiten Öffnungen angeordnet sind, wobei sich jeder der Rohlinge vor dem Verpressen mit einem ersten Ende über eine entsprechende Öffnung hinaus in eine zugehörige Rille erstreckt, wobei ein zweites Ende in der entsprechenden Öffnung zurückgehalten ist.

## Revendications

1. Indicateur visuel pour un accouplement hydraulique comprenant :
un composant d'accouplement hydraulique ayant une paroi latérale définissant un intérieur creux et une pluralité de rainures (32) formées sur une surface intérieure de ladite paroi latérale ;
une ouverture (34) formée à travers ladite paroi latérale et coupant l'une desdites rainures ; le matériau d'indicateur (40) étant placé dans ladite ouverture ; et
un élément de transport de fluide raccordé audit composant d'accouplement hydraulique par un processus de sertissage ;
dans lequel :
dans le processus de sertissage, le matériau (44) dudit élément de transport de fluide est comprimé dans lesdites rainures, déplaçant ainsi ledit matériau d'indicateur à l'intérieur de ladite ouverture.

2. Indicateur visuel selon la revendication 1, dans lequel :
ledit matériau d'indicateur (40) comprend une billette de matériau sensiblement non compressible qui se déplace à travers ladite ouverture (34) par la force dudit matériau (44) dudit élément de transport de fluide pendant le sertissage.

3. Indicateur visuel selon la revendication 1, dans lequel :
ledit matériau d'indicateur (40) est électriquement conducteur et correspond sensiblement à la conducttivité dudit composant d'accouplement hydraulique.

4. Indicateur visuel selon la revendication 1, dans lequel :
ledit composant d'accouplement hydraulique comprend une bride (12) ayant une première extrémité (20) raccordée audit élément de transport de fluide, et ayant une seconde extrémité (22) comprenant une nervure (28) et un canal (30) formé sur ladite nervure.

5. Indicateur visuel selon la revendication 1, dans lequel :
ladite ouverture (34) comprend une pluralité d'ouvertures formées à travers ladite paroi latérale ; et ledit matériau d'indicateur (40) comprend une pluralité de billettes de matériau d'indicateur placées dans des ouvertures correspondantes, chacune desdites billettes ayant une première extrémité s'étendant au-delà de ladite ouverture dans une rainure (32) correspondante et une seconde extrémité retenue dans ladite ouverture ;
dans lequel ladite pluralité d'ouvertures est de préférence formée selon un motif en spirale autour d'une circonférence dudit composant d'accouplement hydraulique.

6. Indicateur visuel selon la revendication 1, dans lequel :
ladite ouverture (34) est un trou de forme cylindrique formé à travers ladite paroi latérale, et ledit matériau d'indicateur (40) comprend une billette de forme cylindrique dimensionnée pour s'adapter à l'intérieur de ladite ouverture.

7. Indicateur visuel selon la revendication 1, dans lequel :
ledit matériau d'indicateur (40) a une première extrémité s'étendant au-delà de ladite ouverture (34) dans ladite rainure (32) avant le sertissage, et une seconde extrémité dudit matériau d'indicateur est retenue à l'intérieur de ladite ouverture.

8. Procédé pour fournir un indicateur visuel pour un élément de transport de fluide, comprenant les étapes suivantes :
prévoir un composant d'accouplement hydraulique ayant une paroi latérale définissant un intérieur creux, et une pluralité de rainures (32) formées sur une surface intérieure de ladite paroi latérale ;
former une ouverture (34) à travers ladite paroi latérale et coupant l'une desdites rainures ; placer le matériau d'indicateur (40) dans ladite ouverture de sorte que ledit matériau d'indicateur a une première extrémité s'étendant au-delà de ladite ouverture dans ladite rainure, et une seconde extrémité dudit matériau d'indicateur est retenue à l'intérieur de ladite ouverture ;
prévoir un élément de transport de fluide et insérer une extrémité dudit élément de transport de fluide à l'intérieur dudit composant d'accouplement hydraulique ; et
réaliser un processus de sertissage dans lequel le matériau (44) dudit élément de transport de fluide est comprimé dans lesdites rainures, déplaçant ainsi ledit matériau d'indicateur à l'intérieur de ladite ouverture.

9. Procédé selon la revendication 8, dans lequel :
lorsque le matériau (44) dudit élément de transport de fluide pénètre dans ladite rainure (32) pendant le processus de sertissage, ledit matériau d'indicateur (40) est poussé à travers ladite ouverture (34) vers une surface extérieure dudit composant d'accouplement hydraulique et est rendu visible pour un utilisateur.

10. Procédé selon la revendication 8, dans lequel :
ledit composant d'accouplement hydraulique comprend une bride (12) ayant une première extrémité (20) raccordée audit élément de transport de fluide, et ayant une seconde extrémité (22) comprenant une nervure (28) et un canal (30) formé sur ladite nervure.

11. Procédé selon la revendication 8, dans lequel :
ladite ouverture (34) comprend une pluralité d'ouvertures formées à travers ladite paroi latérale, et espacées les unes des autres selon un motif en spirale ; et
ledit matériau d'indicateur (40) comprend une pluralité de billettes de matériau d'indicateur placées dans des ouvertures correspondantes, chacune desdites billettes ayant une première extrémité s'étendant au-delà de ladite ouverture dans une rainure (32) correspondante avant le sertissage, et une seconde extrémité retenue à l'intérieur de ladite ouverture.

12. Procédé selon la revendication 8, dans lequel :
ladite ouverture (34) est un trou de forme cylindrique formé à travers ladite paroi latérale, et ledit matériau d'indicateur (40) comprend une billette de forme cylindrique dimensionnée pour s'adapter à l'intérieur de ladite ouverture.

13. Procédé pour réaliser un contrôle visuel d'un raccordement serti, comprenant les étapes suivantes :
prévoir un joint serti entre un composant d'accouplement hydraulique et un élément de transport de fluide, dans lequel une ouverture (34) est formée à travers une paroi latérale dudit composant d'accouplement hydraulique, et ladite ouverture est remplie avec le matériau d'indicateur (40) ;
observer ladite ouverture pour déterminer si ledit matériau d'indicateur est visible ; dans lequel si ledit matériau d'indicateur est visible, alors on en conclut que l'on a réalisé un bon sertissage dans lequel une quantité adéquate de matériau (40) dudit élément de transport de fluide est entrée et remplit les rainures de sertissage (32) dudit composant d'accouplement hydraulique pendant le sertissage ; et
en outre dans lequel si ledit matériau d'indicateur n'est pas visible, alors on en conclut que l'on n'a pas réalisé un bon sertissage dans lequel une quantité non adéquate de matériau dudit élément de transport de fluide est entrée dans lesdites rainures de sertissage pendant le sertissage.

14. En combinaison, un accouplement hydraulique et un indicateur visuel selon la revendication 1 pour un accouplement hydraulique afin de déterminer le caractère adéquat des joints sertis dans ledit accouplement hydraulique, comprenant :
un premier composant d'accouplement hydraulique raccordé à un premier élément de transport de fluide correspondant, par un raccordement serti, ledit premier composant d'accouplement hydraulique ayant une paroi latérale définissant un intérieur creux, et une pluralité de rainures formées sur une surface intérieure de ladite paroi latérale remplie avec le matériau dudit premier élément de transport de fluide pendant le sertissage ; un second composant d'accouplement hydraulique raccordé à un second élément de transport de fluide correspondant par un raccordement serti, ledit second composant d'accouplement hydraulique ayant une paroi latérale définissant un intérieur creux, et une pluralité de rainures formées sur une surface intérieure de ladite paroi latérale remplie avec le matériau dudit second élément de transport de fluide pendant le sertissage ;
une première ouverture (34) formée à travers ladite paroi latérale dudit premier composant d'accouplement hydraulique et coupant l'une desdites rainures dudit premier composant d'accouplement hydraulique ;
un premier matériau d'indicateur placé dans ladite première ouverture, dans laquelle ledit premier matériau d'indicateur est visible en observant ledit premier composant d'accouplement hydraulique après le sertissage, si l'on a réalisé un bon sertissage ;
une seconde ouverture (34) formée à travers ladite paroi latérale dudit second composant d'accouplement hydraulique et coupant l'une desdites rainures dudit second composant d'accouplement hydraulique ;
un second matériau d'indicateur placé dans ladite seconde ouverture, dans laquelle ledit second matériau d'indicateur est visible en observant ledit second composant d'accouplement hydraulique après le sertissage, si l'on a réalisé un bon sertissage ; et
un coupleur hydraulique (60) interconnectant des extrémités en vis-à-vis desdits premier et second composants d'accouplement hydraulique.

15. Combinaison selon la revendication 14, dans laquelle :
au moins l'une desdites première et seconde ouvertures (34) comprend une pluralité d'ouvertures formées à travers ladite paroi latérale correspondante, et espacées les unes des autres selon un motif en spirale ; et
au moins l'un desdits premier et second matériaux d'indicateur comprend une pluralité de billettes de matériau d'indicateur placés dans des ouvertures correspondantes de ladite au moins une parmi lesdites première et seconde ouvertures, chacune desdites billettes ayant une première extrémité s'étendant au-delà d'une ouverture correspondante dans une rainure correspondante avant le sertissage, et une seconde extrémité retenue à l'intérieur de ladite ouverture correspondante.
